# EUROPEAN PATENT APPLICATION

(11) **EP 4 228 312 A1**
(43) Date of publication of application: **16.08.2023**
(21) Application number: 23155788.5
(22) Date of filing: 09.02.2023
(51) Int. Cl.: H04W 28/00

(54) **MANAGING DATA NETWORKS ON USER EQUIPMENTS**

(30) Priority: 10.02.2022 IN 202211007188
(71) Applicant: Sterlite Technologies Limited, Haryana 122002 (IN)
(72) Inventor: Patel, Ajay, 122002 Gurugram (IN); Parmar, Viratsinh Gambhirsinh, 122002 Gurugram (IN); Desai, Amol, 122002 Gurugram (IN); Makwana, Alpesh, 122002 Gurugram (IN); Salla, Gourav, 122002 Gurugram (IN)
(74) Representative: Petraz, Gilberto Luigi

(57) **Abstract**

The present disclosure provides a system and a method for managing a plurality of data networks on a user equipment (UE) (102) by simultaneously utilizing an 3GPP network (104) and a Wi-Fi channel (106) on the UE (102) for data usage by utilizing the 3GPP network by a first UE application and utilizing the Wi-Fi channel by a second UE applications and access traffic steering, switching, and splitting (ATSSS), pushing rulesets into the UE that allows control traffic to a network operator for a desired application based on security, criticality, and priority. Th steering includes packet-level switching and splitting through a multipath transmission control protocol and a flow-based data switching.

## Description

### TECHNICAL FIELD

Embodiments of the present disclosure relate wireless communication networks, and more particularly to managing data networks on user equipment and a method thereof.

This application claims the benefit of Indian Application No. 202211007188 titled "MANAGING DATA NETWORKS ON USER EQUIPMENTS" filed by the applicant on Feb, 10th 2022, which is incorporated herein by reference in its entirety.

### BACKGROUND ART

Today's communication systems may comprise separate wireless and wired parts, each of which may be owned and controlled by different operators. Although some cable operators, also known as multiple system operators ("MSOs"), use data over cable service interface specification ("DOCSIS") networks for backhaul internet traffic, individual networks such as mobile cores, DOCSIS, and radios are limited to portions that are not visible to other network types. Typically, each network type (e.g., DOCSIS and LTE) has a separate traffic scheduling algorithm. Thus, currently, when these types of networks are combined networks, the resulting architecture may be inefficient and may result in longer delays.

In order to support higher data rate and spectrum efficiency, the Third Generation Partnership Project (3GPP) Long Term Evolution (LTE) system has been introduced into 3GPP Release 8 (R8). (LTE Release 8 may be referred to herein as LTE R8 or R8-LTE.) In LTE, transmissions on the uplink are performed using Single Carrier Frequency Division Multiple Access (SC-FDMA). In particular, the SC-FDMA used in the LTE uplink is based on Discrete Fourier Transform Spread Orthogonal Frequency Division Multiplexing (DFT-S-OFDM) technology. As used hereafter, the terms SC-FDMA and DFT-S-OFDM are used interchangeably.

In LTE, a wireless transmit/receive unit (WTRU), alternatively referred to as a user equipment (UE), transmits on the uplink using a limited, contiguous set of assigned sub-carriers in a Frequency Division Multiple Access (FDMA) arrangement. For example, if the overall Orthogonal Frequency Division Multiplexing (OFDM) signal or system bandwidth in the uplink is composed of useful sub-carriers numbered 1 to 100, a first given WTRU may be assigned to transmit on sub-carriers 1-12, a second WTRU may be assigned to transmit on sub-carriers 13-24, and so on. While the different WTRUs may each transmit into a subset of the available transmission bandwidth, an evolved Node-B (eNodeB) serving the WTRUs may receive the composite uplink signal across the entire transmission bandwidth.

In both LTE and LTE-A, a UE, and therefore a user, may experience service degradation at a cell edge. Throughput, quality of service (QoS), and other factors may be affected by interference from other cells when a UE is operated at the edge of a cell. What is needed in the art are methods and systems that leverage the capabilities of LTE-Ato address the problems with US operation at the edge of a cell

Recently, multiple techniques, such as load balancing, offloading, have been developed and deployed to improve user service quality or user experience while operating a mobile application. In the same context, some of the prior art references are given below:

A prior art reference "Multipath transmission control protocol-based multi-access traffic steering solution for 5G multimedia-centric network: Design and testbed system implementation" discloses that access traffic steering, switching, and splitting (ATSSS) is a traffic aggregation technology at the network level. It can easily expand throughput or provide redundancy under the common CN (Release 15) architecture that accommodates various types of ANs (e.g. 5G new radio (NR), Wi-Fi, satellite, broadband fixed). The ATSSS technology began to be standardized in Release 16.22 It aims to overcome the limitations of the MPTCP-based traffic aggregation function deployed outside the 3GPP network and to provide traffic aggregation more efficiently at the network level.

Another prior art reference "CN108353010B" relates to techniques for integration of wireless access and wired networks by receiving a bandwidth report ("BWR") at a termination element of a first network; scheduling a first network transmission opportunity for the at least one endpoint data using information derived from the received BWR; and receiving the at least one endpoint data from the first network forwarding device according to the scheduled first network transmission opportunity.

Another prior art reference "US9392515B2" teaches methods and systems splitting data in a wireless communications network to use multiple base stations for transmission to user equipment, or may be split by user equipment for transmission to multiple base stations. Data splitting may be performed at the Packet Data Convergence Protocol (PDCP) layer or at the Radio Link Control (RLC) layer. The data may be split at the Media Access Control (MAC) layer on user equipment and/or on a base station.

Yet another prior art reference "CN103797888A" discloses systems, devices, and configurations to implement trusted connections within wireless networks. The wireless local area network (WLAN) may be attached to a 3GPP evolved packet core (EPC) as a trusted access network, without use of an evolved packet data gateway (ePDG) and overhead from related tunneling and encryption. Information to create the trusted attachment between a mobile device and a WLAN may be exchanged using Access Network Query Protocol (ANQP) extensions defined by IEEE standard 802.11u-2011, or using other protocols or standards such as DHCP or EAP.

Yet another prior art reference "US20140092742A1" discloses management apparatus and method to support wireless local area network (WLAN) offloading may include a network manager (NM); a first element manager (EM), coupled to the network manager, to communicate with the network manager and one or more WLANs; and a second EM, coupled to the NM, to communicate with the NM and one or more base stations of a cellular network.

While the prior arts provide various techniques to enhance the user experience like by switching between two network channels, however, there is a dearth of techniques that provide smooth and seamless transition between two network channels while improving the user experience and network utilization optimization. Therefore, in the light of the above-stated discussion, there is a need to overcome the above stated disadvantages. Thus, the present disclosure provides a system and method to manage data networks on a user equipment (UE) to enhance user experience.

### SUMMARY OF THE DISCLOSURE

Embodiments of the present disclosure provide a system and method to manage data networks on a user equipment (UE) to enhance user experience by utilizing 3GPP (3rd Generation Partnership Project) network and Wi-Fi networks simultaneously. The system utilizes Access Traffic Steering, Switching and Splitting (ATSSS) technology and to optimize network utilization.

According to the first aspect of the present disclosure, the method comprises configuring an application by one of a user, an operator and an app owner and receiving one or more rulesets on the UE from a network and utilizing an 3GPP (3rd Generation Partnership Project) network and a Wi-Fi channel on the UE simultaneously for data usage. Simultaneous utilization of the 3GPP (3rd Generation Partnership Project) network and the Wi-Fi channel comprises utilizing the 3GPP (3rd Generation Partnership Project) network by a first one or more UE applications and utilizing the Wi-Fi channel by a second one or more UE applications.

According to the second aspect of the present disclosure, the simultaneous utilization of the 3GPP (3rd Generation Partnership Project) network and the Wi-Fi channel occurs by access traffic steering, switching and splitting (ATSSS), wherein the network pushes the one or more rulesets into the UE that allows to control traffic to a network operator for a desired application based on security, criticality, and priority, wherein steering includes packet-level switching and splitting through a multipath transmission control protocol (MP-TCP) and a flow-based data switching.

According to the third aspect of the present disclosure, the simultaneous utilization and enabling the 3GPP (3rd Generation Partnership Project) network and the Wi-Fi channel on the UE comprises performing authentication and key generation by the application, fetching the one or more rulesets by the application, enabling one or more UE applications based on a configured channel by the application and generating integrity protection policy for the one or more UE applications by the one or more rulesets based on an integrity protection technique included in the ATSSS. The enabling of the one or more UE applications by the application comprises performing an integrity protection by the application on one or more existing applications in the UE by using rules, traffic descriptor and access selection descriptor.

According to the fourth aspect of the present disclosure, the method includes configuring one of the 3GPP (3rd Generation Partnership Project) network and the Wi-Fi channel for the one or more UE applications on the UE, wherein the one or more rulesets associate the one or more UE applications with at least one of the 3GPP (3rd Generation Partnership Project) network and the Wi-Fi channel and switching of a UE application between the 3GPP (3rd Generation Partnership Project) network and the Wi-Fi channel happens based on the one or more rulesets.

According to the fifth aspect of the present disclosure, the method includes launching the one or more rulesets in the UE to provide selection of a channel for the one or more UE applications, where one UE application uses one channel at a time based on priority selection.

These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1Fig. 1 is a block illustrating a system for managing data networks on a user equipment (UE) in accordance with an embodiment of the present invention;
Fig. 2 illustrates various elements of the UE in accordance with an embodiment of the present invention;
Fig. 3 is is a pictorial snapshot illustrating exemplary screen of the UE depicting registration process and applications using different data network channels in accordance with an embodiment of the present invention;
Fig. 4 is a pictorial snapshot illustrating exemplary screen of the UE depicting registration process and applications using different data network channels in accordance with an embodiment of the present invention; and
Fig. 5 is a flow chart illustrating a method for managing data networks on the UE in accordance with an embodiment of the present invention.

The system and method are illustrated in the accompanying drawings, which like reference letters indicate corresponding parts in the various figures. It should be noted that the accompanying figure is intended to present illustrations of exemplary embodiments of the present invention. This figure is not intended to limit the scope of the present invention. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

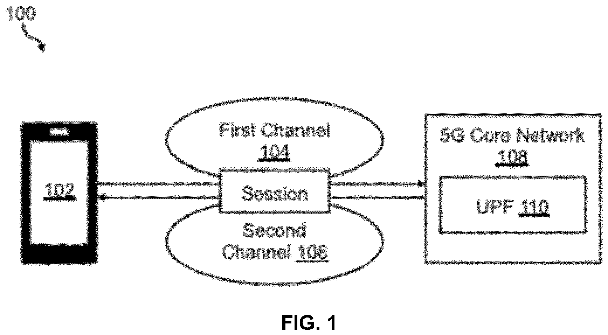

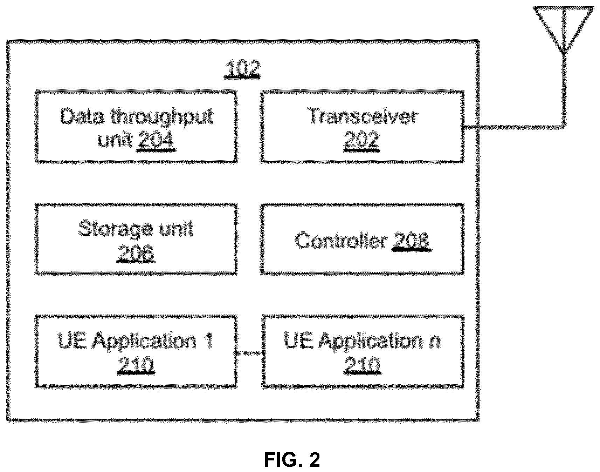

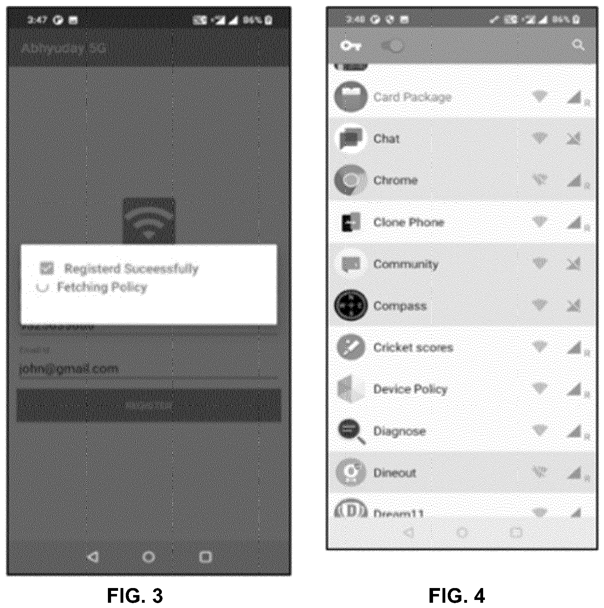

Now simultaneous reference is made to FIG. 1 through FIG. 4, in which, FIG. 1 illustrates a system 100 for managing data/access networks on a user equipment (UE), FIG. 2 illustrates various elements of the UE, FIG. 3 and FIG. 4 illustrate example screens of the UE depicting registration process and applications using different data network channels respectively.

In accordance with an embodiment of the present invention, the system 100 may comprise the user equipment (UE) 102 connected to a network 108. The UE 102 may be but not limited to a mobile phone, smart phone, laptop, desktop, for example. In particular, the network 108 may be a core network, for example 5G core network. Moreover, system 100 may manage a plurality of data networks on UE 102 by simultaneous utilization of a first channel 104 and a second channel 106. Further, the first channel 104 may be based on a 3GPP access network and the second channel 106 may be based on a non-3GPP access network or vice-versa. In an example, the first channel 104 may be a 3GPP and the second channel 106 may be a Wi-Fi channel.

In accordance with an embodiment of the present invention, in order to simultaneously use and enable the first channel 104 and the second channel 106, the UE 102 may perform authentication and key generation using an application (data throughput unit 204 as shown in FIG. 2). In particular, the application 204 may be configured by a user, an operator, an app owner, for example. The application 204 may fetch one or more rulesets (or policies) from the network 108 (as shown in FIG. 3) that enables one or more UE applications (UE Application 1, UE Application 2...UE Application n as shown in FIG. 2) 210 based on configured channel by performing integrity protection on one or more existing applications in the UE 102 by using rules, traffic descriptor, access selection descriptor, for example.

In accordance with an embodiment of the present invention, the one or more rulesets may generate integrity protection policy for the one or more UE applications based on an integrity protection algorithm included in ATSSS.

In accordance with an embodiment of the present invention, the UE 102 may simultaneously utilize the 3GPP (3rd Generation Partnership Project) network 104 and the Wi-Fi channel 106 for data usage by utilizing the ATSSS, where a first one or more UE applications may utilize the 3GPP (3rd Generation Partnership Project) network 104 and a second one or more UE applications may utilize the Wi-Fi channel 106. The system 100 may configure one of the 3GPP (3rd Generation Partnership Project) network 104 and the Wi-Fi channel 106 for the one or more UE applications on the UE 102, where one UE application can use only one channel at a time based on priority selection. Further, the one or more UE applications may be configured by a user, an operator, an app owner, for example.

In accordance with an embodiment of the present invention, the UE 102 and the network 108 may be ATSSS enabled. The ATSSS stands for Access Traffic Steering, Switching and Splitting, which may be supported by UE 102 and the network 108. In particular, the ATSSS feature/technique may be sustained over any access network such as untrusted and trusted non-3GPP access networks, wireline 5G access networks, for example, as long as an MA-PDU (Multi-Access Protocol Data Unit) session can be established over such access network(s). Particularly, the ATSSS technique enables the MA-PDU session that may exchange PDUs between the UE 102 and a data network by simultaneously using the first channel 104 and the second channel 106 and two independent N3/N9 tunnels between a user plane function (UPF) 110 and an access network or radio access network or gNB. Moreover, the UPF 110 is a fundamental and vital component of the 5G core infrastructure enabling low-latency edge computing and terminates an N6 interface of a PDU session within the network 108. Further, the N6 interface provides connectivity between the UPF 110 and other external or internal networks or service platforms, such as Internet, public cloud or private clouds. The N3 interface facilitates user data transfer from the access network to the UPF 110, making it possible to create both low and high-latency services and the N9 interface is an interface between two UPF's, for example, an Intermediate I-UPF and a UPF Session Anchor.

In accordance with an embodiment of the present invention, MA-PDU connectivity service may be realized by establishing the MA-PDU session, i.e., a PDU session that may have user-plane resources on two access networks, which assumes both 3GPP access and non-3GPP access are allowed for an S-NSSAI (Single Network Slice Selection Assistance Information) of the PDU session. The PDU session may be a UE initiated PDU session, a UE initiated PDU session handover between 3GPP and non-3GPP, a UE initiated PDU session handover from EPS (Evolved Packet System) to 5GS (5G System), a network triggered PDU session.

In accordance with an embodiment of the present invention, the UE 102 may request the MA-PDU session when the UE 102 is registered via any of the 3GPP and non-3GPP accesses. Further, the MA-PDU session may be based on one of IPv4, IPv6, IPv4v6, and Ethernet. After the establishment of the MA-PDU session and when there are user-plane resources on both access networks, the UE 102 applies network-provided policy, i.e., ATSSS rulesets (also referred to as one or more rulesets) and considers local conditions like network interface availability, signal loss conditions, user preferences, for example, to decide on a distribution of uplink traffic across the two access networks.

Similarly, the UPF anchor of the MA-PDU session applies network-provided policy like N4 rules and feedback information received from the UE 102 via the user-plane such as unavailability or availability of the access network to decide on a distribution of downlink traffic across the two N3/N9 tunnels and two access networks. When there are user-plane resources on only one access network, the UE 102 applies the ATSSS rulesets and considers local conditions for triggering the establishment or activation of the user plane resources over another access.

In accordance with an embodiment of the present invention, the system 100 may be configured to push the one or more rulesets on the UE 102 from the network 108 launch one or more rulesets in the UE device 102 and provide selection of the channel for the one or more UE applications. In particular, the one or more rulesets may associate the one or more UE applications with at least one of the 3GPP (3rd Generation Partnership Project) network and the Wi-Fi channel, based on which, a UE application may be switched between the 3GPP (3rd Generation Partnership Project) network and the Wi-Fi channel.

Below Table 1 is a tabular illustration for some example ATSSS rulesets:

**Table 1: Sample ATSSS rulesets**

| Information Name | Details | |
|---|---|---|
| **Rule Precedence** | Determines the order in which the ATSSS rule is evaluated in the UE | |
| **Traffic Descriptor** | Application Descriptor (list) | |
| | IP descriptors (list) | |
| | 5-tuple : IP source and destination addresses and ports and protocol | |
| | Non-IP descriptors (list) | |
| | Destination of non-IP (Ethernet) traffic | |
| **Access Selection Descriptor** | Steering Mode | Active Standby |
| | | Active = 3GPP \| non-3GPP |
| | | Smallest Delay |
| | | (see 5.32.5 of 23.501 for Access Network Performance Measurements) |
| | | Load-Balancing |
| | | 3GPP% = Percentage |
| | | Non-3GPP% = 100% - 3GPP% |
| | | Priority-based |
| | | Priority Access = [3GPP \| non-3GPP] |
| | Steering Fuonctionality | |
| | MP-TCP or ATSSS-LL | |

In LTE (Long Term Evolution), the capability to utilize both 3GPP and Non-3GPP access networks has been there from the early days of wireless communications technology. As LTE matured, so too did the techniques available for manipulating how data should be split and transferred over each access network, particularly when both access types are available for use. 5G's ATSSS technique requires the 5G core network 108 for implementation, and provides similar functionality to the aforementioned 4G steering techniques. In particular, ATSSS allows the service provider to configure ATSSS rulesets and push them to UE 102 via the network 108. Moreover, the ATSSS rulesets dictate how the UE 102 should utilize the 3GPP and Non-3GPP access networks it may have available, specifically with respect to sending uplink traffic. Conversely, for downlink traffic, the network 108 may provide the ATSSS rulesets to the UPF 110 which dictate which access network should be used for which traffic flow.

Further, the implementation of ATSSS allows the network 108 to push the one or more rulesets (policies) into the UE 102 that allows to control the traffic to network operator for desired applications based on security, criticality, and priority, where the steering functionality may include a packet-level switching and splitting through multipath transmission control protocol (MP-TCP) and flow-based data switching (ATSSS-LL).

Packet-Level Switching is a method of grouping data into packets that are transmitted over a digital network. Packets are made of a header and a payload. Data in the header is used by networking hardware to direct the packet to its destination, where the payload is extracted and used by an operating system, application software, or higher layer protocols. Packet switching is the primary basis for data communications in computer networks worldwide.

Packet-Level Split is something both eNB will have the same bearer (bearer ID also same) and splits the single IP flow (single service packets) into two and forwards in the two bearers. Multi-Path TCP (MP-TCP) is an effort towards enabling the simultaneous use of several IP-addresses/interfaces by a modification of TCP that presents a regular TCP interface to applications, while in fact spreading data across several sub-flows.

Flow-Based Data Switching is a cache-based forwarding mechanism that performs packet forwarding for the first packet in a flow, performs cache lookup on subsequent packets of the same flow and applies cached results without evaluating the input and output path.

ATSSS-LL is meant to define a layer-2 Multi-Access mechanism between the UE 102 and the UPF 110 at the user plane of the network 108. In the case of Ethernet PDU, it is the only mechanism available in ATSSS, whereas if PDU is IP v4/v6, ATSSS-LL complements MP-TCP by managing the traffic which is not making use of MP-TCP.

In accordance with an embodiment of the present invention, steering modes may be Active-Standby, Smallest Delay, Load Balancing and Priority Based.

In the Active-Standby mode, one of the two links/channels is marked as a master and the other as a slave, in which the traffic is sent via the master link unless the same becomes temporarily unavailable.

In the Smallest Delay mode, the link which, at the moment of session initiation, shows the lowest RTT is used. If the link becomes unavailable, then the other link will be used during the session.

In the Load Balancing mode, a % of share between the two channels/links can be specified, for example 60% and 40%. If one of the two links/channels becomes unavailable, the balancing goes all in favour of the other link (100%).

In the Priority based mode, the traffic is sent initially only to the link marked with a higher priority, until it results congested. The traffic is steered to a low priority link/channel, if the high priority link/channel becomes unavailable.

Referring to FIG. 2, the UE 102 may comprise a transceiver 202, the data throughput unit 204, a storage unit 206, at least one processor or controller 208 and the one or more UE applications 210 (as shown in FIG. 4). However, the components of the UE 102 are not limited to the above-described example, and for example, the UE 102 may include more or fewer components than the illustrated components. Further, the labels or names of the components are used only for illustrative purpose and do not limit the scope of the present disclosure. One or more components can be combined together to perform same or substantially similar function in the UE 102.

In accordance with an embodiment of the present invention, the transceiver 202 may transmit and receive signals to and from a base station to enable the first channel 104 on the UE 102 and transmit and receive signals to and from a router, for example, to enable the second channel 106. In particular, the data throughput unit 204 is the application described in conjunction with FIG. 1. The user may register in the data throughput unit 204 by providing sufficient user information. Moreover, the data throughput unit 204 may receive the one or more rulesets from the network 108 to enable simultaneous utilization of the first channel 104 and the second channel 106 for the one or more UE applications 210. Non-limiting examples of the one or more UE applications 210 are shown in FIG. 4 that utilizes different data network channels. That is, the first one or more UE applications utilize the 3GPP (3rd Generation Partnership Project) network 104 and the second one or more UE applications utilize the Wi-Fi channel 106.

In accordance with an embodiment of the present invention, the storage unit 206 may store programs and data necessary for the operation of the data throughput unit 204 and the one or more UE applications 210. Additionally, the storage unit 206 may store control information or data included in signals transmitted and received by the UE 102. Further, the storage unit 206 may be composed of a storage medium such as read only memory (ROM), random access memory (RAM), hard disk, compact disc ROM (CD-ROM), and digital versatile disc (DVD), or a combination of storage media. Also, there may be a plurality of storage units.

In accordance with an embodiment of the present invention, the controller 208 may control a series of processes so that the UE 102 can operate according to the description described above. There may be a plurality of controllers that may perform a component control operation of the UE 102 by executing a program stored in the storage unit 206.

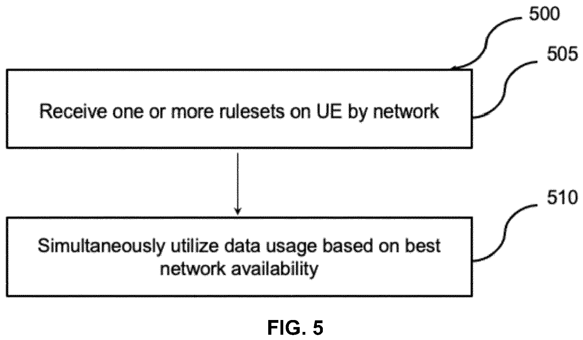

Fig. 5 is a flowchart illustrating a method for managing data networks on the UE 102. It may be noted that in order to explain the method steps of the flowchart 500, references will be made to the elements explained in FIG. 1 through FIG. 4.

At step 502, the one or more rulesets are received on UE 102 from the network 108.

At step 504, the first channel 104 and the second channel 106 are simultaneously utilized for data usage based on best network availability. In particular, the first channel 104 may be based on the 3GPP access network, such as the 3GPP (3rd Generation Partnership Project) network and the second channel 106 may be based on the non-3GPP access network, such as the Wi-Fi channel or vice-versa.

It may be noted that the flowchart 500 is explained to have above stated process steps; however, those skilled in the art would appreciate that the flowchart 500 may have more/less number of process steps which may enable all the above stated implementations of the present disclosure.

Advantageously, the present disclosure results in cost saving as expanding Wi-Fi network can save huge cost compared to expanding the mobile spectrum. Further, facilitates improved data transmission rate, thereby improving user experience. The best example for this is to restrict the data usage from certain applications where the user is in international roaming. Further, the present disclosure allows control of the traffic to a network operator for a desired application based on security, criticality and priority.

Although FIG. 1 shows various components of the system 100 but it is to be understood that other embodiments are not limited thereon. The system 100 may include less or more number of components. Further, the labels or names of the components are used only for illustrative purpose and do not limit the scope of the present disclosure. One or more components can be combined together to perform same or substantially similar function in the system 100.

The various actions act, blocks, steps, or the like in the flow chart and sequence diagrams may be performed in the order presented, in a different order or simultaneously. Further, in some implementations, some of the actions, acts, blocks, steps, or the like may be omitted, added, modified, skipped, or the like without departing from the scope of the present disclosure.

The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware. The results of the disclosed methods may be stored in any type of computer data repositories, such as relational databases and flat file systems that use volatile and/or non-volatile memory (e.g., magnetic disk storage, optical storage, EEPROM and/or solid-state RAM).

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general-purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for managing a plurality of data networks on a user equipment (UE) (102) **characterized in that**: simultaneously utilizing an 3GPP (3rd Generation Partnership Project) network (104) and a Wi-Fi channel (106) on the UE (102) for data usage.

2. The method as claimed in claim 1, wherein simultaneously utilizing the 3GPP (3rd Generation Partnership Project) network (104) and the Wi-Fi channel (106) comprising:
utilizing the 3GPP (3rd Generation Partnership Project) network by a first one or more UE applications; and
utilizing the Wi-Fi channel (106) by a second one or more UE applications.

3. The method as claimed in claim 2, wherein the method comprises simultaneous utilization of the 3GPP (3rd Generation Partnership Project) network (104).

4. The method as claimed in claim 2, wherein the Wi-Fi channel (106) by access traffic steering, switching and splitting (ATSSS).

5. The method as claimed in claim 2, wherein a network (108) pushes one or more rulesets into the UE (102) that allows to control traffic to a network operator for a desired application based on security, criticality, and priority.

6. The method as claimed in claim 2, wherein steering includes packet-level switching and splitting through a multipath transmission control protocol (MP-TCP).

7. The method as claimed in claim 2, wherein the method further includes a flow-based data switching.

8. The method as claimed in claim 1, wherein the method configuring one of the 3GPP (3rd Generation Partnership Project) networks.

9. The method as claimed in claim 1, wherein the method involves receiving one or more rulesets on the UE (102) from a network (108).

10. The method as claimed in claim 1, wherein the method comprises one or more rulesets associate one or more UE applications (210) with at least one of the 3GPP network (104) and the Wi-Fi channel (106).

11. The method as claimed in claim 1, wherein the method comprising switching a UE application between the 3GPP network (104) and the Wi-Fi channel (106) based on the one or more ruleset.

12. The method as claimed in claim 1, wherein the method comprises configuring an application (204) by one of a user, an operator and an app owner.

13. The method as claimed in claim 1, wherein launching one or more rulesets in the UE (102) provides selection of a channel for one or more UE applications (210), where one UE application uses one channel at a time based on priority selection.

14. The method as claimed in claim 1, wherein simultaneously utilizing and enabling the 3GPP network (104) and the Wi-Fi channel (106) on the UE (102), comprising:
performing, by an application (204), authentication and key generation;
fetching, by the application (204), one or more rulesets;
enabling, by the application (204), one or more UE applications (210) based on a configured channel; and
generating, by the one or more rulesets, integrity protection policy for the one or more UE applications (210) based on an integrity protection technique included in an ATSSS.

15. The method as claimed in claim 9, wherein enabling the one or more UE applications (210) by the application (204) comprising performing, by the application (204), integrity protection on one or more existing applications in the UE (102) by using rules, traffic descriptor and access selection descriptor.
